(19) Europäisches Patentamt
European Patent Office
Office européen des brevets

(11) **EP 2 101 336 B1**

(12) **FASCICULE DE BREVET EUROPEEN**

(45) Date de publication et mention
de la délivrance du brevet:
**12.01.2011 Bulletin 2011/02**

(51) Int Cl.:
*H01G 2/08* (2006.01)  *H01G 9/155* (2006.01)
*H01M 10/00* (2006.01)

(21) Numéro de dépôt: **09154748.9**

(22) Date de dépôt: **10.03.2009**

(54) **Dispositif accumulateur d'energie electrique et train comportant une pluralite de tels dispositifs**

Vorrichtung zur Speicherung elektrischer Energie und eine Zusammenschaltung solcher Vorrichtungen

Energy storage device and interconnection of such devices

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.03.2008 FR 0851669**

(43) Date de publication de la demande:
**16.09.2009 Bulletin 2009/38**

(73) Titulaire: **Peugeot Citroën Automobiles Société Anonyme**
**78140 Velizy Villacoublay (FR)**

(72) Inventeur: **Rolland, Guillaume**
**78380, BOUGIVAL (FR)**

(74) Mandataire: **Ménès, Catherine et al**
**Peugeot Citroën Automobiles SA**
**Propriété Industrielle (LG081)**
**18, rue des Fauvelles**
**92250 La Garenne Colombes (FR)**

(56) Documents cités:
**DE-A1- 4 105 785    US-A- 3 243 672**
**US-B1- 6 430 024**

## Description

## Domaine technique

La présente invention concerne le domaine des éléments de stockage électrique, notamment des éléments de stockage d'énergie du type batteries ou du type supercondensateurs - également connus sous le terme de super- ou ultra-capacités ou encore UCAP- destinés tout particulièrement aux applications de forte puissance.

Ces applications sont par exemple dans le domaine des transports (véhicules hybrides, tramways, bus, etc.), de l'alimentation électrique (éoliennes) ou encore plus généralement dans des domaines où des pointes de consommation électriques peuvent nécessiter de supplémenter l'énergie fournie par une batterie ou un réseau. La présente invention concerne plus particulièrement la charge et la décharge de tels éléments.

## Etat de la technique antérieure

La technologie de stockage d'énergie par des supercondensateurs repose sur le principe de fonctionnement des condensateurs classiques, et offre ainsi des performances en densités d'énergie relativement faibles mais avec une capacité au stockage / destockage en fortes puissances. Ces supercondensateurs s'apparent ainsi fonctionnellement aux batteries électrochimiques qui équipent notamment les véhicules automobiles. Les supercondensateurs supportent un nombre de cycles de charge et de décharge très supérieur à celui des batteries conventionnelles, les spécialisant dans les applications requérant des sources de puissance élevée sur des temps courts. La spécificité d'une supercapacité est d'être un système d'accumulation de tension capacitif avec, comme pour tout condensateur, la quantité de charge électrostatique Q reliée à la tension U par l'équation

$$Q = CU^2/2.$$

Les supercondensateurs actuellement commercialisés sont typiquement constitués d'un élément cylindrique formé par l'enroulement sur lui-même d'un feuillet composé d'une feuille d'aluminium formant une anode, d'un séparateur en papier et d'une autre feuille d'aluminium formant une cathode. Les feuilles formant l'anode et la cathode subissant typiquement un traitement de surface pour favoriser la formation d'une fine couche d'alumine et surtout l'adhésion d'une couche active, comme par exemple une mousse de carbone. L'élément ainsi formé est ensuite imprégné d'un électrolyte et l'ensemble est enfermé dans un boitier étanche afin d'éviter l'évaporation de l'électrolyte en prévoyant, bien sûr, des moyens pour connecter l'anode et la cathode à un circuit électrique.

Du fait de cette technologie de construction par enroulement de films minces, la tension unitaire maximum d'une UCAP est aujourd'hui limitée à environ 2,7 Volts. Cette faible tension impose, dans beaucoup d'applications, d'associer les cellules en série et ou en parallèle, sous forme de modules. La constitution de modules, impose d'autre part l'emploi de moyens électroniques pour réaliser un équilibrage électrique.

La présence des Ucap et de l'électronique d'équilibrage conduit à privilégier des moyens de confinement de manière à les protéger des projections d'eau et de l'humidité, en particulier lorsqu'il s'agit d'applications du type automobile. Le confinement est typiquement enceinte isolante en plastique ou en métal.

Dans l'ensemble, tous ces moyens mis en oeuvre pour conditionner les supercondensateurs tendent à favoriser un échauffement important au sein des supercondensateurs. Il est à noter de plus que, le plus souvent, l'enveloppe extérieure de l'Ucap elle-même est recouvert d'un manchon typiquement en matière plastique afin de renforcer l'étanchéité tant vis-à-vis des liquides et gaz présents dans le supercondensateur que des liquides extérieurs, en particulier de l'eau pour des applications véhicules. De plus, si ces ensembles sont disposés dans le compartiment moteur, ils sont dans un environnement chaud ce qui complique encore le refroidissement.

Or, ces échauffements nuisent fortement à la durée de vie des supercondensateurs essentiellement du fait de l'augmentation de l'intensité des courants de fuite et de la formation de gaz dans l'électrolyte qui créent, au fil du temps une augmentation de la pression interne de l'Ucap. Cette augmentation de pression pouvant conduire à l'éclatement de l'Ucap. De nombreux travaux ont mis en lumière qu'au-delà d'une température ambiante de 25°C, toute augmentation de la température d'environ 10°C conduit à réduire la durée de vie du supercondensateur pratiquement d'un facteur 10. Il faut de plus souligner que l'air environnant les supercondensateurs est d'autant plus chaud que ces dernières s'échauffent et que la circulation d'air dans le module est réduite ou presque nulle.

Dans ce qui précède, nous n'avons évoqué que le cas des supercondensateurs mais des problèmes similaires se posent avec d'autres types de stockeur d'énergie, pour lesquels le problèmes peut être également de réchauffer et/ou limiter la température.

Pour résoudre ce problème, le brevet US-6430024 propose d'insérer dans la partie centrale du supercondensateur un tube conducteur thermique ayant au moins une extrémité en dehors du boitier renfermant l'élément cylindrique, et refroidi par exemple par un ventilateur ou par d'autres moyens de réfrigération. Cette solution aggrave toutefois les risques de défauts d'étanchéité (aux fluides et électriques). De plus, elle ne permet pas de réaliser des modules complexes comportant des empilements de supercondensateurs. Par ailleurs, on connait de US-A-3243672 un dispositif de stockage électrique (une capacité), traversé par une conduite de passage d'un fluide de refroidissement, ladite conduite étant plus longue que l'élément de stockage de sorte qu'elle déborde au-delà des conducteurs formant des pôles négatif et positif du stocker. Mais ce dispositif n'est pas adapté à la réalisation de modules empilant les capacités.

Il est aussi connu du brevet FR-2863400 de former des blocs liés en série, chaque bloc comprenant une série de supercondensateurs liés en parallèle au moyen de barres rigides formées dans un matériau bon conducteur électrique et munies par exemple d'ailettes pour assurer un bon refroidissement. Pour cela, chaque supercondensateur est muni de deux bornes de connexion électrique, analogues aux bornes plus ou moins des piles électriques de type R qui équipent nombre d'appareils commerciaux, les bornes plus de tous les supercondensateurs d'un même bloc étant reliées au même élément rigide et les bornes moins étant reliées à un second élément rigide. Cette solution n'est toutefois que partiellement satisfaisante pour ce qui concerne le refroidissement au sein même des supercondensateurs.

La présente invention vise donc à proposer un nouveau conditionnement des éléments de stockage électrique permettant de contrôler la température, et notamment d'éviter un échauffement des supercondensateurs, pour augmenter leur durée de vie. De plus, ce conditionnement doit permettre de former aisément des modules complexes, en particulier de modules comportant des supercondensateurs mis bout à bout, et ceci sans perdre la possibilité de contrôler la température des supercondensateurs formant le module.

Selon l'invention, il est proposé un dispositif accumulateur comportant un élément de stockage électrique traversé par une conduite de passage d'un fluide de conditionnement thermique, un premier et second collecteurs formant les pôles positif et négatif du dispositif accumulateur, **caractérisé en ce que** la conduite est d'une longueur supérieure à celle de l'élément de stockage électrique et déborde de celui-ci à chacune de ces extrémités, et en ce que les pôles sont situés sur les faces opposées de l'élément de stockage électrique par lesquelles la conduite débouche.

L'invention peut être appliquée à différents types d'éléments de stockage électrique, comme par exemple des batteries d'accumulateurs, mais est tout particulièrement avantageux dans le cas où cet élément de stockage est un supercondensateur, notamment un supercondensateur est constitué par l'enroulement sur lui-même d'un feuillet comportant deux feuilles formant respectivement une anode et une cathode, séparée par un séparateur imbibé d'un électrolyte, l'enroulement étant réalisé de manière telle que la partie centrale de l'élément cylindrique est essentiellement vide.

L'élément de stockage est en général de forme cylindrique, et le plus souvent un cylindre droit dans le cas des supercondensateurs du fait de la technologie habituellement utilisée pour leurs productions. Pour autant, l'invention s'applique notamment à tout élément de stockage dont l'enveloppe correspond à une surface cylindrique (au sens mathématique du terme, ce qui inclut en particulier les formes prismatiques dont les cubes et les parallélépipèdes rectangles).

Le dispositif accumulateur selon l'invention permet avantageusement de former des trains de dispositifs accumulateurs, montés en série.

Avec de tels modules, tout le train de dispositifs accumulateurs est confiné électriquement sans qu'il ne soit nécessaire de prévoir d'enceinte isolante spécifique. De plus, le montage permet également d'interdire toute pénétration d'un liquide, en particulier de l'eau vers les parties électriquement actives des éléments de stockage. Autrement dit, le module peut être constitué d'éléments « nus » sans que les éléments actifs (contacts électriques et éléments constituant les éléments électriquement actifs des éléments de stockage, comme par exemple les électrolytes) ne soient exposés.

Une telle configuration est tout particulièrement avantageuse car elle autorise un meilleur refroidissement des dispositifs accumulateurs non seulement par l'intérieur grâce à la conduite traversante intérieure mais également par l'extérieur qui n'est plus protégée par de multiples épaisseurs d'isolant électrique (mais donc également le plus souvent thermique).

On comprend aisément que ces modules conviennent tout particulièrement pour l'alimentation électrique de véhicules automobiles ou apparentés, notamment pour des véhicules dits hybride, pour lesquels il est difficile de garantir l'absence d'exposition à des projections d'eau (lors du passage de guet, flaques d'eau ou tout simplement lors d'opération de nettoyage du véhicule notamment avec des moyens de projection d'eau haute pression.

**Brève description des figures**

D'autres avantages et particularités de l'invention ressortent de la description de modes de réalisation faite ci-après en référence aux dessins annexés dans lesquels :

- La figure 1 est un schéma montrant un ensemble de supercondensateurs selon l'art antérieur ;

- La figure 2 est un schéma montrant deux dispositifs accumulateurs selon une première variante de l'invention selon laquelle la conduite est réalisée dans un matériau isolant électrique, deux accumulateurs étant associés par vissage ; la figure 2A est une vue plus détaillée de la zone de jonction entre les deux dispositifs accumulateurs ;

- Les figures 3, et la figure 3A détaillant la zone de jonction, correspond à un second mode de réalisation de l'invention, dans lequel la partie terminale des conduites sert pour l'établissement des connexions électriques ;

• La figure 4 illustre une variante de l'invention dans laquelle des moyens pour forcer le flux de fluide de conditionnement thermique sont prévus ;

• Les figures 5A, 5B et 5C correspondent à un troisième mode de réalisation de l'invention dans lequel on prévoit des bagues et des coupelles de jonction, la figure 5A étant une vue plus détaillée de la zone de jonction et la figure 5C une vue en perspective d'une coupelle de jonction ;

• La figure 6 montre un train de dispositifs accumulateurs selon l'invention avec des rondelles d'entrée et sortie du fluide de conditionnement.

**Exposé détaillé de modes de réalisation de l'invention**

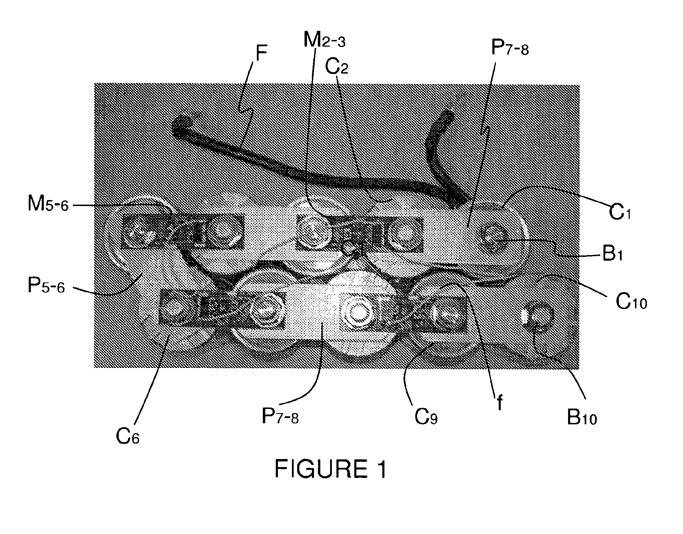

La figure 1 est un schéma d'un ensemble de supercondensateurs selon l'art antérieur, tel que proposé par exemple en appoint d'une batterie conventionnelle, notamment pour l'alimentation électrique d'une machine électrique apte à entrainer le vilebrequin du moteur thermique pour des périodes plus ou moins prolongées et plus ou moins fréquentes. Un tel ensemble peut ainsi équiper un véhicule dit « full hybride » ou un véhicule équipé par exemple d'une fonction dite « stop-and-start » qui commande l'arrêt du moteur thermique dès que le véhicule est à l'arrêt, ou proche d'un arrêt, par exemple pour respecter un feu de circulation ou lors d'une congestion de trafic, et qui provoque le redémarrage du moteur thermique dès que le conducteur manifeste sa volonté de redémarrage, par exemple par un appui sur la pédale d'accélération.

L'ensemble illustré figure 1, vu ici de dessus, comporte 10 supercondensateurs $C_1$, $C_2$, ..., $C_{10}$, montés en série au moyen de 9 pattes de raccordement. Sur le schéma, seules les pattes $P_{1-2}$, $P_{3-4}$, $P_{9-10}$ montées sur la face de dessus et reliant les supercondensateurs $C_1$-$C_2$; $C_3$-$C_4$ sont visibles mais il importe de noter que d'autres pattes relient les supercondensateurs $C_2$ et $C_3$, disposées elles, en carrière

Ces pattes sont réalisées dans un corps électriquement conducteur et sont maintenues en place par des boulons B1, B2...pour assurer la continuité électrique. Une telle connectique est imposée par les intensités élevées du courant électrique mises en jeu. Les supercondensateurs terminaux sont par ailleurs munis de deux câbles de puissance pour le raccordement au réseau.

Pour équilibrer les charges des supercondensateurs, ce type d'ensemble comporte de plus une série de modules électroniques, montés comme les pattes en série, en alternance avec celles-ci. A la patte $P_{1-2}$ correspond donc un module $M_{1-2}$ non visible, alors que le module reliant les supercondensateurs $C_2$ et $C_3$ est lui visible. Chaque module est formé d'un circuit électronique dont les éléments sont par exemple collés sur une plaque en céramique ou en matière plastique non conductrice. Ces modules permettent de mesure les tensions des supercondensateurs, et de commander l'équilibrage de celles-ci si des écarts trop importants sont constatés. Des fils électriques f ici de petits diamètres relient les modules électroniques les uns aux autres.

Un tel ensemble pose de multiples problèmes de mise en oeuvre. Ainsi, la multiplicité des éléments conducteurs électriques présentés « à l'air libre » implique qu'en pratique, l'ensemble soit monté dans une enceinte fermée pour éviter les courts-circuits et/ou le contact avec par exemple un air extérieur humide (ou même tout simplement de l'eau si l'ensemble équipe un véhicule qui peut devoir passer un guet ou tout simplement être nettoyé au moyen d'un jet d'eau haute pression).

De plus, on comprend aisément qu'un tel ensemble est très difficile à refroidir (ou à échauffer), notamment compte tenu de la présence de tous les éléments de connectique.

La figure 1 illustre par ailleurs un autre problème inhérent à une telle architecture, à savoir la complexité relative du montage qui doit normalement être effectué par un praticien électricien qualifié, et non par un simple mécanicien.

C'est pourquoi la présente invention propose de modifier la structure du supercondensateur - ou plus généralement de tout dispositif accumulateur comportant un élément de stockage électrique comme par exemple une batterie d'accumulateurs, d'une manière telle que les dispositifs accumulateurs soient connectables pôle à pôle tout en permettant le refroidissement interne.

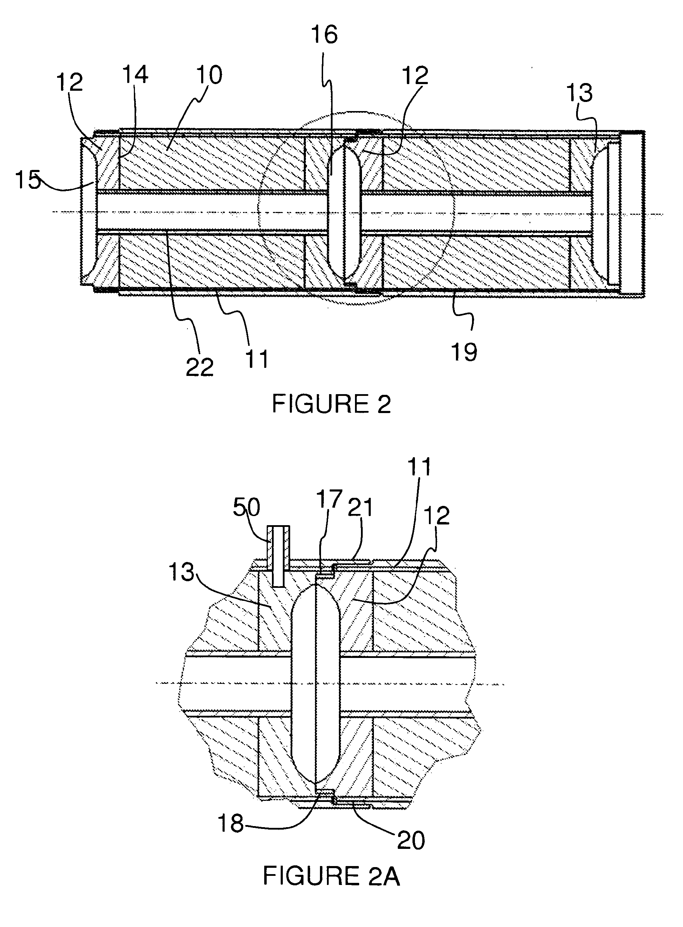

Une première variante de réalisation est illustrée au moyen des figures 2 et 2a dans laquelle on a représenté deux dispositifs accumulateurs conformes à un premier mode de réalisation de l'invention, reliés entre eux. Le dispositif accumulateur a une forme essentiellement cylindrique et comporte un élément de stockage 10, enfermé dans une enveloppe de confinement 11. Aux deux extrémités de l'élément de stockage 10 sont disposés des collecteurs électriques 12 et 13.

Chaque collecteur est constitué par une pièce électriquement conductrice, avec une face plane 14 soudée à l'élément de stockage 10 et une face convexe 15. Ainsi un espace vide 16 se forme entre les faces convexes de deux collecteurs mis bout à bout. Cet espace vide participe à l'extraction des calories des faces latérales.

Comme plus particulièrement visible à la figure 2A, pour la connexion électrique, le collecteur mâle 12 peut comporter un filetage 17 qui coopère avec un taraudage 18 porté par une extrémité du collecteur femelle 13. L'enveloppe de confinement se prolonge jusqu'au niveau des collecteurs. Dans l'exemple ici représenté, qui convient tout particulièrement bien avec des enveloppes de confinement très simples, il peut être avantageux de prévoir de plus une extérieure 19, la partie d'extrémité 20 de la coque en regard du collecteur 12 étant amincie pour être recouverte par une partie d'extrémité correspondante 21 formant une languette, disposée en regard d'un collecteur 13. Ainsi, lorsqu'un collecteur 13 est vissé dans un collecteur 12, les extrémités 20 et 21 se superposent pour assurer le maintien de l'étanchéité assurée par la coque. Dans une variante non représentée, les extrémités 20 et 21 peuvent également être pourvues de moyens d'encliquetage ou même d'un pas de vis, à la condition toutefois que le matériau choisi soit suffisamment souple pour autoriser un jeu lors du vissage des collecteurs. L'étanchéité peut éventuellement être complétée par l'utilisation d'un joint ou moyen équivalent.

Avantageusement, et comme illustré seulement à la figure 2A, des prises 50 pour le branchement de modules électroniques externes peuvent être également prévues.

L'élément de stockage est par ailleurs traversé par une conduite 22, réalisée en matière plastique ou tout matériau non conducteur électrique (ou à tout le moins dont la surface extérieure n'est pas électriquement conductrice). Pour favoriser les échanges thermiques, il importe toutefois que cette conduite tubulaire ne constitue pas une barrière thermique trop importante, aussi sera-t-il de préférence relativement, ce qui par ailleurs ne pose pas de problèmes car cette conduite tube ne supporte pas de contraintes mécaniques. La conduite 22 déborde l'élément de stockage et débouche au niveau des faces convexes 15.

Ainsi, lorsque deux dispositifs accumulateurs sont reliés en vissant deux collecteurs 12 et 13, la liaison électrique est donc constituée et par ailleurs, un fluide de refroidissement (ou d'échauffement) circulant dans la conduite peut circuler librement. De plus au niveau de chaque interface, le fluide remplit le vide 16 de sorte que toutes surfaces internes sont bien refroidies.

Dans cette variante, un fluide non conducteur, comme par exemple de l'air est utilisé. Un liquide diélectrique pourrait également être utilisé.

En plaçant bout à bout des séries des dispositifs accumulateurs, on va ainsi pouvoir former des trains de collecteurs, avec une continuité du tube de refroidissement. Un équivalent aux dispositifs accumulateurs de la figure 1 est la combinaison de dispositifs porteurs à leurs deux extrémités de collecteurs mâles ou femelles, un train de collecteurs étant alors formé en associant des dispositifs « mâles » à des dispositifs « femelles ».

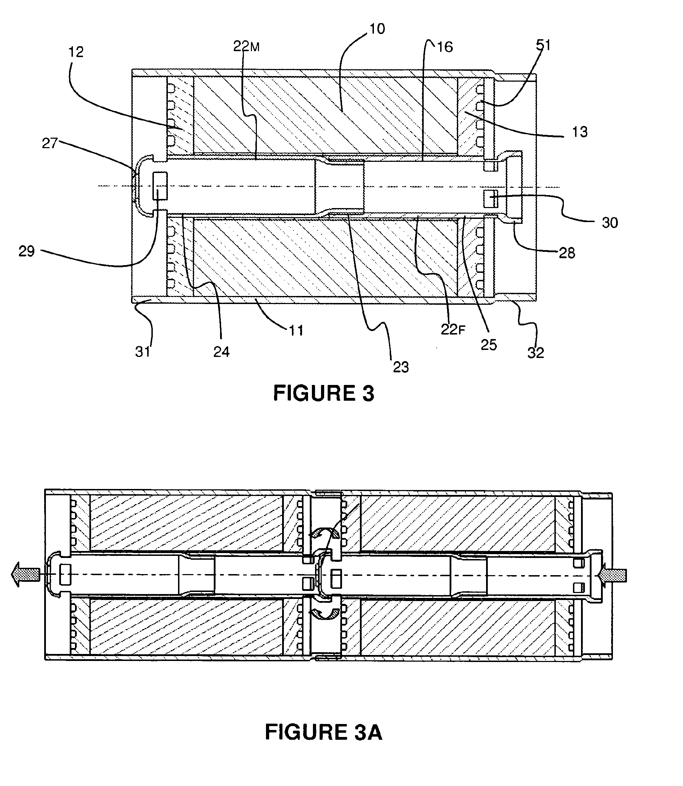

Les figures 3 et 3A illustrent un autre mode de réalisation de l'invention, selon lequel les connexions électriques sont obtenues par un système de type fiche / prise. La coque externe étant formée d'un isolant électrique, de préférence bon conducteur thermique.

Dans cette variante, on retrouve donc un élément de stockage 10, entourée d'une coque isolante 11, avec des collecteurs 12 et 13, qui -contrairement à la variante illustrée précédemment- sont essentiellement identiques, mais peuvent éventuellement présenter un état surface favorisant les échanges thermiques, ce qui peut être obtenu par exemple par des rainures 51. Ces rainures 51 constituent ainsi un moyen pour guider l'écoulement du fluide de conditionnement thermique. Elles peuvent être créées sur les faces d'extrémité ou sur la rondelle 40. D'autres moyens pour guider l'écoulement du fluide de conditionnement thermique peuvent être envisagés comme par exemple des ailettes, montées de préférence sur les bases de l'élément de stockage.

La conduite centrale traversant l'élément de stockage sert également de conducteur électrique et est donc constituée par deux demi-tubes $22_M$ et $22_F$. Ces demi-tubes sont par de préférence réalisés dans un matériau bon conducteur thermique et électrique, qui sont emmanchés l'un sur l'autre en interposant une bague 23 formée dans un matériau isolant électrique. La portion 24 du demi-tube 22M, et respectivement la portion 25 du demi-tube 22F sont reliées électriquement aux collecteurs 12 et respectivement 13. La bague 23 a donc pour fonction d'éviter un court-circuit tout en autorisant l'utilisation d'un matériau bon conducteur pour favoriser les échanges thermiques et électriques avec l'élément de stockage. Pour simplifier une fabrication en série, il est prévu d'utiliser des demi-tubes qui se rejoignent à peu près à mi-longueur de l'élément de stockage comme dans le cas illustré mais d'autres dispositions peuvent être prises pour éviter le court-circuit, par exemple en remplaçant les demi-tubes par un tube en matériau composite non conducteur sur lequel on viendrait fixer des pôles conducteurs.

Au-delà des portions 24 et 25, les demi-tubes se prolongent par des extrémités 27 et 28 conformées pour constituer pour l'une une fiche d'alimentation électrique (extrémité 27) et l'autre une prise (extrémité 28) dans laquelle une fiche d'un autre dispositif accumulateur semblable peut être introduite pour raccorder deux dispositifs entre eux. Pour fixer les idées, ne supposerons par la suite que la fiche constitue le pôle positif du dispositif et la prise le pôle négatif, mais il va de soi que l'inverse est également possible.

Pour les applications de fortes puissances, fiches et prises peuvent être munies de filetage et de taraudage pour assurer un raccordement vissé. Dans les cas les plus simples, le choix de formes complémentaires formées par exemple par emboutissage convient.

Dans le cas d'une solution vissée, la coque 11 qui sert également d'enveloppe de confinement peut simplement être emmanchée avec ou sans moyens d'étanchéité complémentaires.

A proximité de chaque extrémité 27, 28, les demi-tubes comporte au moins une ouverture latérale 29, 30 pour autoriser l'introduction d'un fluide de refroidissement du côté formant une fiche ainsi que du côté prise lorsqu'une fiche est introduite dans la prise, et ainsi permettre d'assurer la continuité de l'écoulement du fluide de conditionnement thermique lorsque plusieurs accumulateurs sont reliés. Des ouvertures axiales peuvent éventuellement être envisagées.

Par ailleurs, la coque 11 se prolonge à chacune de ses extrémités par des embouts 31 et 32 qui débordent de l'élément de stockage. Dans la variante ici représentée, l'embout 31, du côté de la fiche 27, se termine à la hauteur de la fiche, alors que l'embout 32 du côté de la prise 28 est légèrement plus long et de plus un peu pincé de sorte que lorsque deux accumulateurs sont associés électriquement, l'embout 31 vient recouvrir l'embout 32, comme on peut le voir sur la figure 3B.

Ces embouts sont par exemple emboutis, comme dans le cas représenté, pour un montage par emboitement mais il est aussi possible de prévoir d'autres modes d'assemblage comme par exemple un système de filetage/taraudage pour permettre de visser les deux dispositifs accumulateurs l'un à l'autre. Des moyens formant joints d'étanchéité peuvent être prévus pour assurer une étanchéité complémentaire au niveau des embouts.

Le dispositif accumulateur est ainsi adapté à la formation de trains de dispositifs montés en série. A la figure 3A on a réalisé un tel train comportant deux dispositifs. Dans une telle position, les embouts permettent de former une gaine continue de sorte que le fluide de refroidissement suit au travers du train un chemin essentiellement représenté par les flèches F, en étant introduit dans le tube du dispositif à gauche sur la figure par une ouverture proche de la fiche, ressortant à l'autre extrémité par l'ouverture proche de la prise pour entrer dans la chambre intermédiaire entre deux dispositifs délimitées par les embouts terminaux et pénétrant ensuite dans le tube associé au dispositif accumulateur associé.

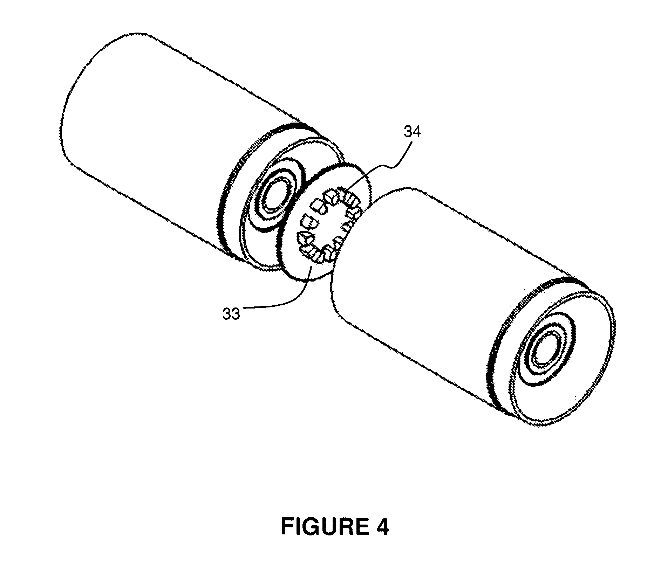

On comprend aisément que pour assurer notamment un bon refroidissement des collecteurs, il peut être avantageux de prévoir des moyens pour guider le fluide de refroidissement (ou chauffage) au niveau des chambres intermédiaires. Ces moyens peuvent être directement intégrés aux collecteurs, ou comme dans l'exemple illustré figure 4, portés par exemple par une rondelle 33 ou anneau comportant une surface présentant un certain nombre de bossages 34 formant des chicanes, rondelle, que l'on vient par exemple loger dans la chambre intermédiaire, et qui va ainsi aider au guidage du fluide de conditionnement thermique. Bien évidemment, dans l'hypothèse d'une connexion électrique par fiche/prise, comme dans la variante illustrée à la figure 3, on la rondelle 33 doit être percée.

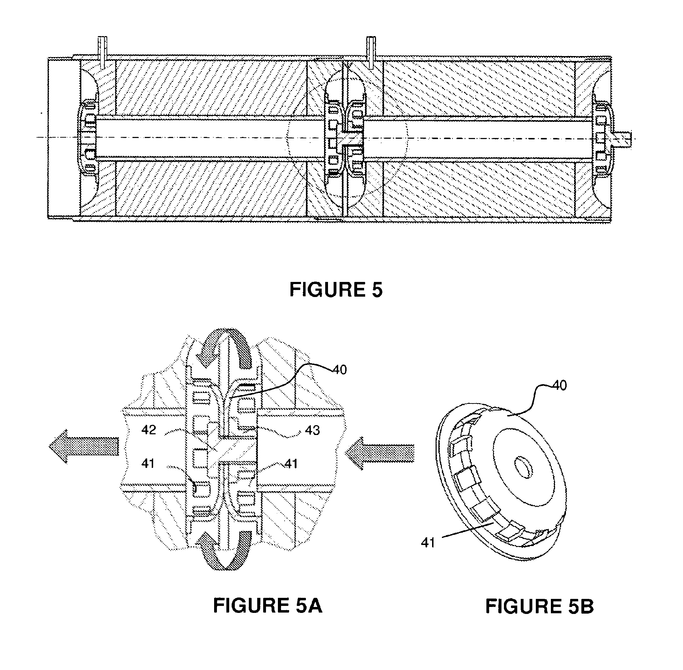

Une autre variante de l'invention est schématisée avec les figures 5, 5A et 5B. Cette variante peut être interprétée comme une variante hybride des deux précédentes, avec une connexion électrique, le système de forçage du fluide de refroidissement est assuré par des coupelles embouties 40, qui comportent des perçages 41 pour forcer le passage latéral du fluide de refroidissement.

Une autre spécificité de cette variante de réalisation est que la liaison électrique est assurée par vissage au travers d'un passage dédié, avantageusement constitué par la conduite centrale. Sur la figure 5A on voit ainsi un système avec une vis 42 et un écrou soudé 43.

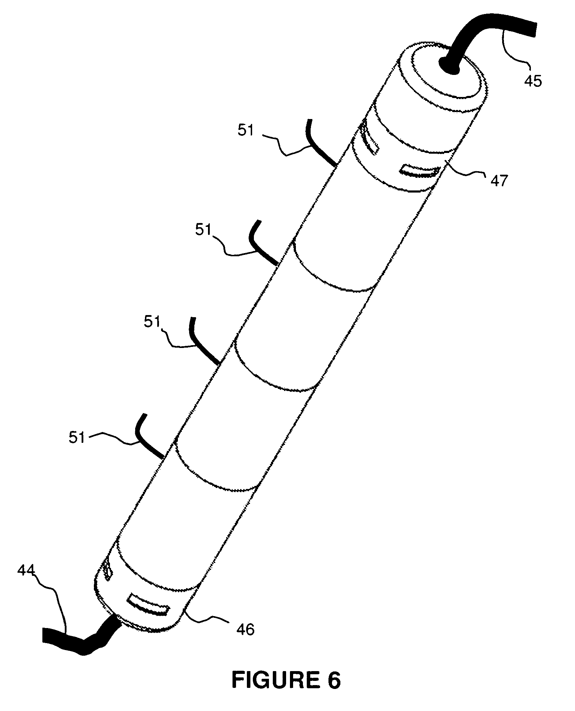

Les accumulateurs selon l'invention peuvent facilement former des trains de quatre accumulateurs ou plus comme illustrés à la figure 6, les faces d'extrémité étant utilisées pour raccorder le train à un réseau électrique, ici matérialisé par des câbles électriques 44 et 45. L'encombrement de ces éléments de connectique pouvant gêner l'introduction du fluide de réfrigération, il est alors avantageux de prévoir des bagues d'extrémité 46 et 47 pour introduire le fluide de conditionnement thermique, ces bagues pouvant par ailleurs contenir un système pour forcer la circulation du fluide, comme par exemple un ventilateur, ou autre moyen équivalent pour forcer la circulation du fluide de réfrigération.

Sur cette figure 6, on remarque par ailleurs les fils 51 qui vont permettre la connexion de modules électroniques via des prises analogues à la prise 50 représentée à la figure 2A.

## Revendications

1. Dispositif accumulateur comportant un élément de stockage électrique (10) traversé par une conduite (22) de passage d'un fluide de conditionnement thermique, un premier (12) et second (13) collecteurs formant les pôles positif et négatif du dispositif accumulateur, **caractérisé en ce que** la conduite (22) est d'une longueur supérieure à celle de l'élément de stockage électrique et déborde de celui-ci à chacune de ces extrémités, et **en ce que** les pôles sont situés sur les faces opposées de l'élément de stockage électrique par lesquelles la conduite débouche.

2. Dispositif accumulateur selon la revendication 1, **caractérisé en ce que** la conduite (22) est constituée à ses deux extrémités débouchantes (22M, 22F) par un conducteur électrique, chaque extrémité de la conduite étant reliée à un collecteur et les deux extrémités étant isolées électriquement l'une de l'autre.

3. Dispositif accumulateur selon la revendication 2, **caractérisé en ce que** l'une des extrémités de la conduite forme une fiche d'alimentation électrique (27), l'autre extrémité formant une prise (28), l'extrémité formant une prise (28) et l'extrémité formant une fiche (27) étant par ailleurs munies d'au moins une ouverture (29, 30) pour autoriser la continuité du chemin fluidique lorsque deux accumulateurs sont connectés entre eux par leurs pôles opposés.

4. Dispositif selon la revendication 1, **caractérisé en ce** les collecteurs portent des filetages (17) ou des taraudages (18) pour la connexion électrique de deux accumulateurs.

5. Dispositif selon la revendication 1, **caractérisé en ce qu'**il comporte un écrou (43), destiné à coopérer avec une vis (42) pour la connexion électrique de deux accumulateurs entre eux.

**6.** Dispositif selon l'une des revendications précédentes, **caractérisé en ce qu'**il comporte des moyens pour guider l'écoulement du fluide de refroidissement.

**7.** Dispositif accumulateur selon la revendication 6, **caractérisé en ce que** lesdits moyens de guidage sont portés par une rondelle (40) rapportée.

**8.** Dispositif accumulateur selon l'une des revendications 1 à 7, **caractérisé en ce qu'**il comporte des embouts (31, 32) débordant de l'élément de stockage.

**9.** Dispositif accumulateur selon la revendication 8, **caractérisé en ce que** lesdits embouts (31, 32) sont emboutis pour être emboîtés en force.

**10.** Dispositif accumulateur selon la revendication 8, **caractérisé en ce que** lesdits embouts (31, 32) sont filetés ou taraudés pour former un raccord vissé.

**11.** Dispositif accumulateur selon l'une quelconque des revendications précédentes, **caractérisé en ce que** ledit élément de stockage électrique est un supercondensateur.

**12.** Dispositif accumulateur selon la revendication 11, **caractérisé en ce que** ledit supercondensateur est constitué par l'enroulement sur lui-même d'un feuillet comportant deux feuilles formant respectivement une anode et une cathode, séparée par un séparateur imbibé d'un électrolyte, l'enroulement étant réalisé de manière telle que la partie centrale de l'élément cylindrique est essentiellement vide et peut recevoir le tube de refroidissement.

**13.** Dispositif accumulateur selon l'une quelconque des revendications 1 à 12, **caractérisé en ce que** ledit élément de stockage électrique est une batterie d'accumulateurs.

**14.** Train constitué par une pluralité de dispositifs accumulateurs selon l'une des revendications 1 à 13, connectés en série.

**15.** Train selon la revendication 14, **caractérisé en ce qu'**il comporte des moyens (47) pour connecter le train à une source d'un fluide de conditionnement.

**Claims**

**1.** Accumulator device comprising an electric storage element (10) crossed by a conduit (22) for the passage of a thermal packaging fluid, a first (12) and second (13) collectors forming the positive and negative poles of the accumulator device, **character-** ized in that the conduit (22) has a length greater than that of the electric storage element and extends beyond the latter at each of its ends, and **in that** the poles are situated on the opposite faces of the electric storage element through which the conduit opens out.

**2.** Accumulator device according to Claim 1, **characterized in that** the conduit (22) is constituted at its two opening ends (22M, 22F) by an electric conductor, each end of the conduit being connected to a collector and the two ends being insulated electrically with respect to each other.

**3.** Accumulator device according to Claim 2, **characterized in that** one of the ends of the conduit forms an electric supply plug (27), the other end forming a connector (28), the end forming a connector (28) and the end forming a plug (27) being, moreover, provided with at least one opening (29, 30) to permit the continuity of the fluidic path when two accumulators are connected with each other by their opposite poles.

**4.** Device according to Claim 1, **characterized in that** the collectors have threads (17) or tappings (18) for the electric connection of two accumulators.

**5.** Device according to Claim 1, **characterized in that** it comprises a nut (43) intended to cooperate with a screw (42) for the electric connection of two accumulators with each other.

**6.** Device according to one of the preceding claims, **characterized in that** it comprises means for guiding the flow of the coolant.

**7.** Accumulator device according to Claim 6, **characterized in that** the said guiding means are carried by an inserted washer (40).

**8.** Accumulator device according to one of Claims 1 to 7, **characterized in that** it comprises end pieces (31, 32) extending beyond the storage element.

**9.** Accumulator device according to Claim 8, **characterized in that** the said end pieces (31, 32) are shaped so as to be press-fitted.

**10.** Accumulator device according to Claim 8, **characterized in that** the said end pieces (31, 32) are threaded or tapped to form a screwed connection.

**11.** Accumulator device according to any one of the preceding claims, **characterized in that** the said electric storage element is a supercapacitor.

**12.** Accumulator device according to Claim 11, **charac-**

terized in that the said supercapacitor is constituted by the winding on itself of a lamina comprising two sheets forming respectively an anode and a cathode, separated by a separator soaked with an electrolyte, the winding being realized such that the central part of the cylindrical element is essentially empty and can receive the cooling tube.

13. Accumulator device according to any one of Claims 1 to 12, **characterized in that** the said electric storage element is a battery of accumulators.

14. Train constituted by a plurality of accumulator devices according to one of Claims 1 to 13, connected in series.

15. Train according to Claim 14, **characterized in that** it comprises means (47) for connecting the train to a source of a packaging fluid.


**Patentansprüche**

1. Speichervorrichtung, die ein elektrisches Speicherelement (10) aufweist, das von einer Durchgangsleitung (22) eines Kühlmittels durchquert wird, wobei ein erster (12) und ein zweiter (13) Sammler den positiven Pol und den negativen Pol der Speichervorrichtung bilden, **dadurch gekennzeichnet, dass** die Leitung (22) eine Länge hat, die größer ist als die des elektrischen Speicherelements und aus diesem an jedem seiner Enden vorsteht, und dass die Pole auf den gegenüberliegenden Seiten des elektrischen Speicherelements, durch die die Leitung mündet, liegen.

2. Speichervorrichtung nach Anspruch 1, **dadurch gekennzeichnet, dass** die Leitung (22) an ihren zwei durchstoßenden Enden (22M, 22F) aus einem elektrischen Leiter besteht, wobei jedes Ende der Leitung mit einem Sammler verbunden ist und die zwei Enden elektrisch voneinander isoliert sind.

3. Speichervorrichtung nach Anspruch 2, **dadurch gekennzeichnet, dass** eines der Enden der Leitung einen Stecker eines Netzteils (27) bildet, wobei das andere Ende eine Buchse (28) bildet, wobei das Ende, das eine Buchse (28) bildet und das Ende, das einen Stecker (27) bildet, ferner mit mindestens einer Öffnung (29, 30) versehen sind, um die Kontinuität des Fluidverlaufs zu gestatten, wenn zwei Speicher untereinander durch ihre entgegengesetzten Pole verbunden werden.

4. Vorrichtung nach Anspruch 1, **dadurch gekennzeichnet, dass** die Sammler Außengewinde (17) oder Innengewinde (18) für das elektrische Verbinden von zwei Speichern tragen.

5. Vorrichtung nach Anspruch 1, **dadurch gekennzeichnet, dass** sie eine Mutter (43) aufweist, die dazu bestimmt ist, mit einer Schraube (42) für das elektrische Verbinden von zwei Speichern untereinander zusammenzuwirken.

6. Vorrichtung nach einem der vorhergehenden Ansprüche, **dadurch gekennzeichnet, dass** sie Mittel zum Führen des Fließens des Kühlmittels aufweist.

7. Speichervorrichtung nach Anspruch 6, **dadurch gekennzeichnet, dass** die Führungsmittel von einer angebauten Unterlegscheibe (40) getragen werden.

8. Speichervorrichtung nach einem der Ansprüche 1 bis 7, **dadurch gekennzeichnet, dass** sie Ansätze (31, 32) aufweist, die aus dem Speicherelement vorstehen.

9. Speichervorrichtung nach Anspruch 8, **dadurch gekennzeichnet, dass** die Ansätze (31, 32) gestanzt werden, um unter Kraftanwendung eingeschachtelt zu werden.

10. Speichervorrichtung nach Anspruch 8, **dadurch gekennzeichnet, dass** die Ansätze (31, 32) ein Außengewinde oder ein Innengewinde haben, um eine Schraubverbindung zu bilden.

11. Speichervorrichtung nach einem der vorhergehenden Ansprüche, **dadurch gekennzeichnet, dass** das elektrische Speicherelement ein Superkondensator ist.

12. Speichervorrichtung nach Anspruch 11, **dadurch gekennzeichnet, dass** der Superkondensator aus einer Wicklung auf sich selbst eines Bogens besteht, das zwei Blätter aufweist, die jeweils eine Anode und eine Kathode bilden, getrennt von einem Trenner, der mit Elektrolyt getränkt ist, wobei die Wicklung derart ausgeführt wird, dass der zentrale Teil des zylindrischen Elements im Wesentlichen leer ist und das Kühlrohr aufnehmen kann.

13. Speichervorrichtung nach einem der Ansprüche 1 bis 12, **dadurch gekennzeichnet, dass** das elektrische Speicherelement eine Akkumulatorenbatterie ist.

14. Zug, der aus mehreren Speichervorrichtungen nach einem der Ansprüche 1 bis 13 besteht, die in Serie verbunden sind.

15. Zug nach Anspruch 14, **dadurch gekennzeichnet, dass** er Mittel (47) zum Verbinden des Zugs mit einer Quelle eines Kühlmittels aufweist.

FIGURE 1

FIGURE 2

FIGURE 2A

**FIGURE 3**

**FIGURE 3A**

**FIGURE 4**

**FIGURE 5**

**FIGURE 5A**

**FIGURE 5B**

FIGURE 6

**EP 2 101 336 B1**

## RÉFÉRENCES CITÉES DANS LA DESCRIPTION

**Documents brevets cités dans la description**

- US 6430024 B
- US 3243672 A
- FR 2863400